Europäisches Patentamt

European Patent Office

Office européen des brevets

(11) Veröffentlichungsnummer: **0 478 955 A1**

# EUROPÄISCHE PATENTANMELDUNG

(21) Anmeldenummer: **91114496.2**

(51) Int. Cl.5: **H01R 25/14**

(22) Anmeldetag: **29.08.91**

(30) Priorität: **05.10.90 DE 4031553**

(43) Veröffentlichungstag der Anmeldung:
**08.04.92 Patentblatt 92/15**

(84) Benannte Vertragsstaaten:
**AT BE CH DE DK ES FR GB GR IT LI LU NL SE**

(71) Anmelder: **SCHUPA ELEKTRO-GMBH + CO KG**
**Postfach 1460 Klagebach 40**
**W-5885 Schalksmühle(DE)**

(72) Erfinder: **Fedder, Horst, Dipl.-Ing.**
**Westerfelder Weg 37**
**W-5880 Lüdenscheid(DE)**
Erfinder: **Sauer, Wolfgang, Dipl.-Ing.**
**Harpkestrasse 14**
**W-5992 Nachrodt-Wiblingwerde(DE)**

(54) **Einrichtung zur elektrischen Kontaktherstellung.**

(57) Die Einrichtung zur Kontaktherstellung zwischen einem blanken Flachleiter, der auf einer Isolierschicht in einer Installationsschiene angeordnet ist, und einem Anschlußkontakt von einem auf der Installationsschiene installierten Gerät besteht aus einem Federelement, das unmittelbar oder gehalten in einem Isoliergehäuse auf den Anschlußkontakt eines Installationsgerätes aufsteckbar ist.

Fig.2

EP 0 478 955 A1

Die Erfindung betrifft eine Einrichtung gemäß der im Oberbegriff des Hauptanspruches definierten Gattung.

Aus der DE 37 32 650 A 1 ist eine Kontakteinrichtung bekannt, bei der in einer Installationsschiene elektrische Flachleiter nebeneinander angeordnet sind. Sie sind durch eine Isolationsleiste, die auf die Installationsschiene aufrastbar ist, abgedeckt. Im Kontaktbereich ist die Isolationsleiste mit Durchgriffen versehen, durch die die Kontaktelemente auf die Flachleiter geführt sind. Diese Kontaktelemente in Form von federbelasteten Kontaktstiften stellen eine Verbindung zu einer elektrischen Leiterplatte her, durchgreifen sie und stehen oberhalb der Leiterplatte als elektrische Anschlüsse zur Verfügung. Die Ausführung ist so gewählt, daß die Isolationsleiste integraler Bestandteil eines auf eine Installationsschiene aufschnappbaren Installationsgerätes ist, in der die zuvor erwähnte elektrische Leiterplatte angeordnet ist. Diese Kontakteinrichtung hat verschiedene betriebliche Nachteile. So sind die Durchstecköffnungen für die federnden Kontaktelemente anfällig gegen Verschmutzung, was zu ungleichmäßigen Kontaktkräften der Kontaktelemente auf die zu kontaktierenden Busleiter führen kann.

Darüber hinaus benötigt die bekannte Ausführung für einen sicheren Kontakt zwischen einem Flachleiter der Schiene und dem Installationsgerät mindestens zwei voneinander unabhängige Kontaktstifte. Eine solche Kontakteinrichtung ist aufgrund der benötigten Teilezahl relativ aufwendig.

Die Aufgabe der Erfindung besteht darin, für ein auf Installationsschienen aufrastbares Installationsgerät mit aus dem Gerät herausragenden Anschlußkontakten eine Kontakteinrichtung zu schaffen, die geeignet ist, die in einer elektrischen Installationsschiene angeordneten blanken Flachleiter zu kontaktieren. Diese Kontakteinrichtung soll mit wenigen Einzelteilen kostengünstig herstellbar sein. Diese Aufgabe wird erfindungsgemäß durch die kennzeichnenden Merkmale des Hauptanspruches gelöst. Hierbei soll als Kontaktfeder ein brückenförmig ausgebildetes Federelement dienen, das auch in einem Isoliergehäuse in speziellen Durchstecköffnungen einzeln oder mehrfach nebeneinander in diesen festgelegt werden kann. Weiterhin sieht die Erfindung vor, daß die in einem solchen Isoliergehäuse festgelegten Federelemente mit speziell ausgebildeten Bohrungen versehen sind, die geeignet sind, die Anschlußkontakte in Form von Kontaktstiften unter Klemmwirkung aufzunehmen. Durch diese Ausbildung kann das Isoliergehäuse unmittelbar auf ein Installationsgerat gesteckt werden und sodann auf eine Installationsschiene aufgeschnappt werden. Da die Flachleiter in der Installationsschiene blank auf einer Isolierschicht liegen, kann das Installationsgerät mit auf gestecktem Federelement in Form einzelner Federelemente oder festgelegt in einem Isoliergehäuse jede gewählte Positionierung auf der Installationsschiene erhalten, bzw. kann das Gerät gegebenenfalls auch auf der Installationsschiene hin und her geschoben werden, wenn andere Geräte hinzukommen, oder es optisch sinnvoll erscheint, bestimmte Gerätetypen zusammenzufassen, zu trennen, aufzuteilen oder dergleichen.

Der Gegenstand der Erfindung wird nachfolgend anhand der Fig. 1 bis 7 näher erläutert. Es zeigt:

Fig. 1   in Vorderansicht ein auf eine Installationsschiene aufgeschnapptes Installationsgerät mit der erfindungsgemäßen Einrichtung zur Kontaktherstellung zwischen den Flachleitern in der Installationsschiene und dem Installationsgerät,

Fig. 2   einen Schnitt nach der Linie A - B gemäß Fig. 1,

Fig. 3   eine Draufsicht auf das Isoliergehäuse,

Fig. 4   einen Schnitt nach der Linie C - D gemäß Fig. 3,

Fig. 5   perspektivisch und in Explosionsdarstellung das Federelement und bruchstückhaft einen Teil des Isoliergehäuses,

Fig. 6   eine Draufsicht auf eine Installationsschiene mit z. B. zwei aufgeschnappten Installationsgeräten,

Fig. 7   eine Seitenansicht zur Veranschaulichung der Flachleiter innerhalb einer Installationsschiene.

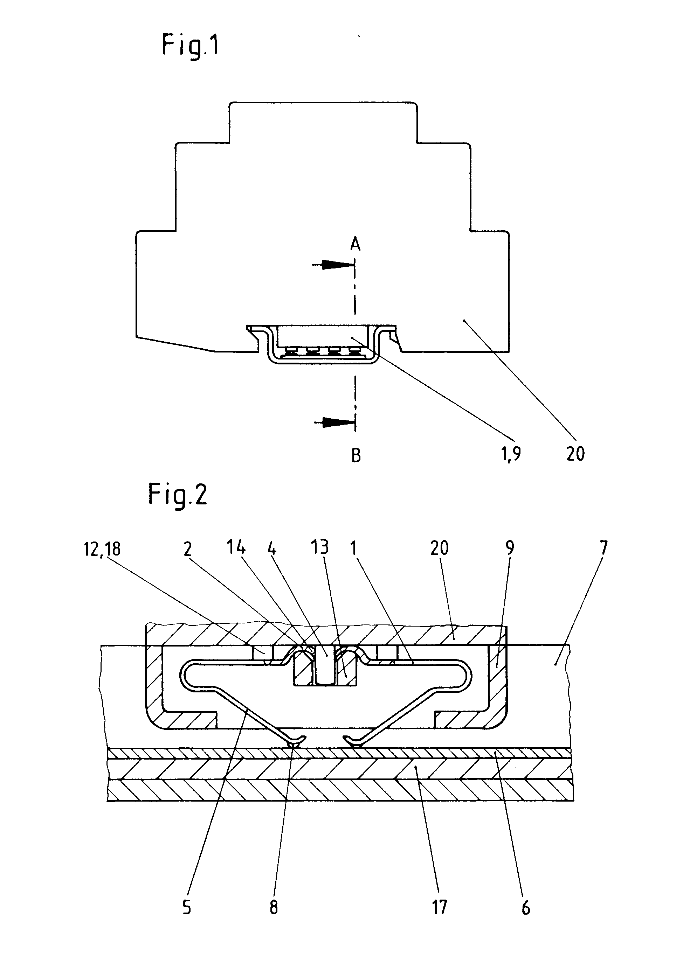

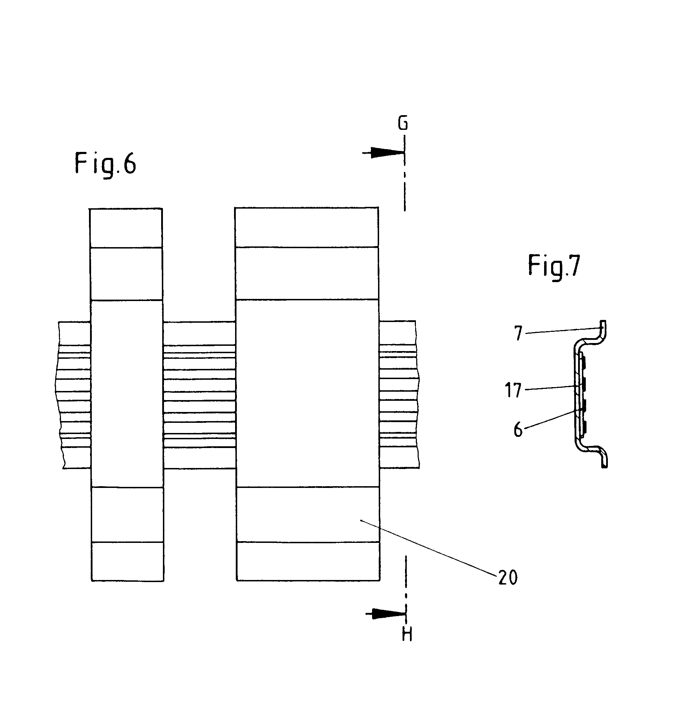

Die Einrichtung nach Fig. 1 bis 7 zur Kontaktherstellung zwischen einem blanken Flachleiter 6 auf Isoliermaterial 17 in einer Installationsschiene 7 und einem Geräteanschlußkontakt 4 eines darauf installierten Gerätes 20 besteht im wesentlichen aus einem Federelement 1, das einerseits als Einzelelement zum unmittelbaren Aufstecken auf einen Geräteanschlußkontakt geeignet ist, andererseits kann es aber auch einzeln oder mehrfach in ein Isoliergehäuse 9 installiert werden, um in dieser Ausführungsform für ein oder mehrere Geräteanschlußkontakte zur Verfügung zu stehen. Das Federelement 1, aus einem Metallstreifen hergestellt, ist zu diesem Zweck vorzugsweise brückenförmig ausgebaut. In seinem Mittelteil 2 ist es mit einer Bohrung 3 versehen, die konzentrisch von ausdrückbaren Zungen 14 umgeben ist. Beim Aufstecken des Federelementes 1 auf einen Anschlußkontakt 4 legen sich die ausgedrückten Zungen der Bohrung konzentrisch und mit Klemmwirkung an den Anschlußkontakt, wodurch mechanisch und elektrisch eine optimale Verbindung gewährleistet ist. Stirnseitig ist das Federelement auf zwei gleichlange Schenkel 5 umgebogen und an den Enden jeweils mit einer Kontaktfläche 8 versehen. Das Mittelteil 2 ist zudem im Bereich der Bohrung 3 noch zu einer Auswölbung 15 ausgeformt, um im Anwendungsfall in Verbindung mit einem Isoliergehäuse 9 durch die Auswölbung eine Auflagefixierung zu erhalten.

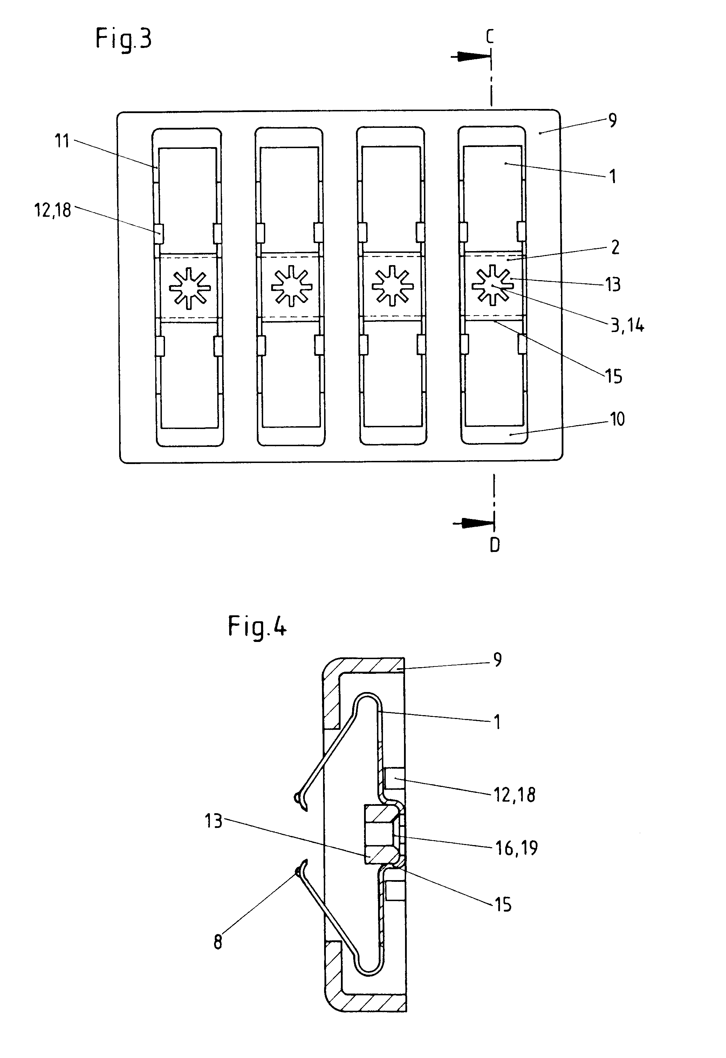

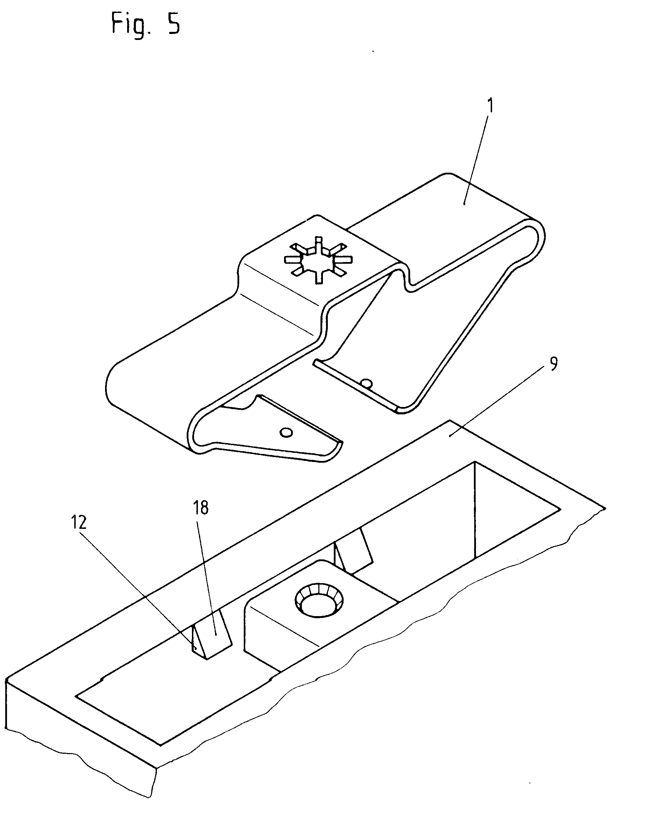

Das in Fig. 3 gezeigte Isoliergehäuse 9 verfügt über vier Durchstecköffnungen 10, die zur Aufnahme von jeweils einem Federelement 1 dienen. An den Rändern 11 der Längsseiten von jeder Durchstecköffnung 10 sind zur Aufnahme eines Federelementes 1 Rastnasen 12 vorgesehen. Damit das Federelement 1 leicht in die Durchstecköffnung 9 eingeführt werden kann, sind die Rastnasen 12 mit Einsteckschrägen 18 versehen. Außerdem sind die Durchstecköffnungen 9 im Einsteckbereich jeweils in der Mitte mit einer Traverse 13 ausgebildet, die zur Aufnahme eines Anschlußkontaktes 4 eine Bohrung 16 mit Versenk 19 aufweist und die gerade so weit unterhalb der Rastnasen 12 angeordnet ist, daß der Abstand zwischen ihrer Oberseite und der Rastnasenunterseite in etwa der Materialdicke des Federelementes 1 entspricht. Bei der Montage des Federelementes 1 im Isoliergehäuse 9 wird dieses in die Durchstecköffnung 10 eingeführt, vorbei an den Einsteckschrägen 18 der Rastnasen 12, wobei aufgrund der Elastizität des Isoliergehäuses 9 die Rastnasen geringfügig zurückweichen und das eingeführte Federelement 1 sodann auf die Traverse 13 lagefixieren und zugleich verrasten (Fig. 5).

Bezugszeichenliste

| | |
|---|---|
| 1 | - Federelement |
| 2 | - Mittelteil von 1 |
| 3 | - Bohrung von 1 |
| 4 | - Geräteanschlußkontakt |
| 5 | - Schenkel von 1 |
| 6 | - Flachleiter |
| 7 | - Installationsschiene |
| 8 | - Kontaktflächen von 5 |
| 9 | - Isoliergehäuse |
| 10 | - Durchstecköffnung von 9 |
| 11 | - Ränder von 10 |
| 12 | - Rastnasen von 10 |
| 13 | - Traverse von 10 |
| 14 | - Zungen von 3 |
| 15 | - Auswölbung |
| 16 | - Bohrung von 13 |
| 17 | - Isoliermaterial von 6 |
| 18 | - Einsteckschrägen von 12 |
| 19 | - Versenk von 16 |
| 20 | - Installationsgerät |

**Patentansprüche**

1. Einrichtung zur Kontaktherstellung zwischen einem blanken Flachleiter auf Isoliermaterial in einer Installationsschiene und dem Anschlußkontakt eines darauf installierten Gerätes, dadurch gekennzeichnet, daß die Einrichtung zur Kontaktherstellung aus einem Federelement (1) besteht, das unmittelbar oder gehalten in einem Isoliergehäuse (9) auf den Anschlußkontakt (4) eines Installationsgerätes (20) aufsteckbar ist.

2. Einrichtung nach Anspruch 1, dadurch gekennzeichnet, daß das Federelement brückenförmig ausgebaut und aus einem Metallstreifen gebildet ist, der in seinem Mittelteil (2) mit einer Bohrung (3) zur Aufnahme eines Geräteanschlußkontaktes (4) versehen ist und dessen stirnseitig umgebogene Schenkel (5) zur Kontaktierung mit einem auf Isoliermaterial (17) aufgebrachten Flachleiter (6) einer Installationsschiene (7) mit Kontaktflächen (8) versehen sind.

3. Einrichtung nach Anspruch 1 und 2, dadurch gekennzeichnet, daß als Isolierträger für ein oder mehrere Federelemente ein Isoliergehäuse (9) mit Durchstecköffnungen (10) versehen ist, die im Einsteckbereich für ein Federelement (1) an ihren Rändern (11) Rastnasen (12) aufweisen und in ihrem Mittelteil mit einer Traverse (13) versehen sind.

4. Einrichtung nach Anspruch 1 bis 3, dadurch gekennzeichnet, daß die Bohrung (3) des Federelementes (1) von konzentrisch ausdrückbaren Zungen (14) umgeben ist.

5. Einrichtung nach Anspruch 1 bis 4, dadurch gekennzeichnet, daß das Mittelteil (2) des Federelementes (1) im Bereich seiner Bohrung (3) zu einer Auswölbung (15) geformt ist.

6. Einrichtung nach Anspruch 1 und 3, dadurch gekennzeichnet, daß die Rastnasen (12) der Durchstecköffnungen (10) zu deren Rändern hin mit Einsteckschrägen (18) versehen sind.

7. Einrichtung nach Anspruch 1 bis 6, dadurch gekennzeichnet, daß die Traverse (13) unterhalb des oberen Randes der Durchstecköffnung (10) angeordnet ist und eine Bohrung (16) aufweist, die zur sicheren Einführung eines Geräteanschlußkontaktes (4) mit einem Versenk (19) versehen ist.

8. Einrichtung nach Anspruch 7, dadurch gekennzeichnet, daß das Versenk (19) bei eingeführtem Geräteanschlußkontakt (4) die nach innen gedrückten Zungen (14) der Bohrung (3) aufnimmt.

9. Einrichtung nach Anspruch 1 bis 8, dadurch gekennzeichnet, daß die Festlegung eines Federelementes (1) auf der Traverse (13) einer Durchsecköffnung (10) durch Klemmwirkung erzielt wird, die sich nach dem Einsteckvorgang, Passieren der Rastnasen (12), einstellt.

Fig.1

Fig.2

Fig.3

Fig.4

Fig. 5

## Fig.6

## Fig.7

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 030 449 (BBC) <br> * Seite 1, Absatz 1; Seite 2, letzter Absatz; Seite 3, letzter Absatz; Figuren 1-3 * <br> – – – | 1 | H 01 R 25/14 |
| D,A | DE-A-3 732 650 (SIEMENS) <br> * Spalte 4, Zeilen 6-33; Figur 1 * <br> – – – | 1 | |
| A | US-A-2 076 558 (H.W. HARTMAN et al.) <br> * Seite 1, rechte Spalte, Zeilen 36-43; Seite 2, linke Spalte, Zeilen 38-51; Seite 2, rechte Spalte, Zeilen 33-45; Figuren 2,4,6 * <br> – – – – – | 1,2 | |
| | | | **RECHERCHIERTE SACHGEBIETE (Int. Cl.5)** <br><br> H 01 R 13/00 <br> H 01 R 25/00 |

Der vorliegende Recherchenbericht wurde für alle Patentansprüche erstellt

| Recherchenort | Abschlußdatum der Recherche | Prüfer |
|---|---|---|
| Berlin | 16 Januar 92 | ALEXATOS G |